# EUROPEAN PATENT APPLICATION

(11) **EP 4 342 755 A1**
(43) Date of publication of application: **27.03.2024**
(21) Application number: 23190270.1
(22) Date of filing: 14.09.2022
(51) Int. Cl.: B60T 17/08, F16D 55/226

(54) **PNEUMATIC BRAKE CYLINDER AND DISC BRAKE**

(62) Divisional of application: 22195607.1
(71) Applicant: KNORR-BREMSE Systeme für Nutzfahrzeuge GmbH, 80809 München (DE)
(72) Inventor: DEROUAULT, Sylvain, 14100 Hermival les Vaux (FR); LETOT, Guillaume, 14940 Sannerville (FR); PROKES, Tomas, 46014 Liberec (CZ)

(57) **Abstract**

The invention discloses a pneumatic brake cylinder (4) of a brake of a vehicle, with a brake cylinder housing (24), a brake piston (9) guided axially in the brake cylinder housing (24) with an extendable and retractable piston rod (6), which projects through an opening (27) in a bottom (25) of the brake cylinder housing (24), a brake chamber (10) which can be ventilated and exhausted, wherein the brake piston (9) together with the piston rod (6) assumes a brake application position when the brake chamber (10) is ventilated and a brake release position when the brake chamber (10) is exhausted, and wherein the brake piston (9) bounds the brake chamber (10), a return spring chamber (20) in which a return spring (21) loading the brake piston (9) into the release position is accommodated and which is bounded on the one hand by the brake piston (9) and on the other hand by the bottom (25) of the brake cylinder housing (24) a fastening device (2) which is provided and designed for the detachable fastening of the brake cylinder (4) to a support structure (3) for the brake cylinder (4), the fastening device (2) comprising at least one fastening bolt (11a, 11b; 35a, 35b) projecting away from the brake cylinder housing (24) in the region of the bottom (25), a venting device (29) interacting with the return spring chamber (20) in such a way that, in the event of a change in the volume of the return spring chamber (20) as a result of a movement of the brake piston (9), air can pass out of the return spring chamber (20) or into the return spring chamber (20) by means of the venting device. The ventilation device (29) comprises the at least one fastening bolt (11a, 11b; 35a, 35b) which has at least one internal channel (28) which opens, on the one hand, with a first mouth (30) into the return spring chamber (20) and, on the other hand, with a second mouth (31) into an outer area (32) of the brake cylinder (4).

## Description

The invention relates to a pneumatic brake cylinder of a brake of a vehicle according to the generic concept of claim 1, to a disc brake for a vehicle with at least one such pneumatic brake cylinder according to the generic concept of claim 10, and to a vehicle with at least one such disc brake according to claim 14.

A brake cylinder and a disc brake are known from DE 10 2012 016 712 A1 or EP 2 888 499 B1. The fastening device there for the brake cylinder has fastening bolts provided with an external thread, which are fastened in the brake cylinder, project away from the brake cylinder and into screw eyes of the brake calliper, where they are locked by means of nuts. A disadvantage of this type of fastening device is that when the brake cylinder is detached from the brake caliper, for example for repair purposes, the brake cylinder must be pulled away from the brake caliper in the direction of the fastening bolts, at least over the length of the fastening bolts, so that the bolts of the brake cylinder can be pulled out of the screw eyes of the brake caliper. However, this requires a certain amount of space within the wheel housing of the vehicle in which the disc brake is arranged, which space is often not available. Furthermore, the disassembly of the brake cylinder from the brake caliper then takes a relatively long time.

A generic brake cylinder and a disc brake are known from FR 1 051 534 A. There, a threaded rod is screwed with its external thread into an internal thread of a bore in the bottom of the brake cylinder. The threaded rod is intended to extend through a structure bore of a support structure for the brake cylinder, where a separate nut is screwed on the threaded rod to fasten the threaded rod on the structure bore. When screwing the threaded rod into the bore in the bottom of the brake cylinder, it is not clear how deep the screwing is to be performed. Thus, the assembly of the brake cylinder on the brake caliper then takes a relatively long time.

The object of the present invention is to provide a pneumatic brake cylinder for a vehicle which is easier to manufacture. Furthermore, a disc brake with such a pneumatic brake cylinder and a vehicle with such a disc brake cylinder are to be provided.

According to the invention, this object is solved by the features of claims 1, 10 and 14.

### Disclosure of the invention

A first aspect of the invention involves a pneumatic brake cylinder of a brake of a vehicle, in particular a pneumatic service brake cylinder, having
a) a brake cylinder housing,
b) a brake piston axially guided in the brake cylinder housing with an extendable and retractable piston rod which projects through an opening in a bottom of the brake cylinder housing,
c) a brake chamber which can be ventilated and exhausted, wherein the brake piston together with the piston rod assumes a brake application position when the brake chamber is ventilated and a brake release position when the brake chamber is exhausted, and wherein the brake piston delimits the service brake chamber,
d) a return spring chamber in which a return spring loading the brake piston into the release position is accommodated and which is bounded on the one hand by the brake piston and on the other hand by the bottom of the brake cylinder housing,
e) a fastening device which is provided and designed for the detachable fastening of the brake cylinder to a support structure for the brake cylinder, the fastening device comprising at least one fastening bolt projecting axially away from the brake cylinder housing in the region of the bottom,
f) a ventilation device cooperating with the return spring chamber in such a way that, in the event of a change in the volume of the return spring chamber as a result of a movement of the brake piston, air can pass out of the return spring chamber or into the return spring chamber by means of the ventilation device, where
g) the ventilation device comprises the at least one fastening bolt which has at least one internal channel which opens, on the one hand, with a first mouth (30) into the return spring chamber and, on the other hand, with a second mouth into an outer area of the brake cylinder, and where
h) the at least one fastening bolt forms a separate component and comprises a bolt shaft and a counter element, which projects radially away in the region of one end of the bolt shaft, and where
i) at least one bore is formed in the region of the bottom of the brake cylinder, through which bore the bolt shaft projects or into which bore the bolt shaft projects.
   In accordance with this first aspect of the invention, it is provided that.
j) the fastening bolt is a screw where the counter element is a screw head that is designed integrally with the fastening bolt and formed and provided to be countered at a support structure bore of the support structure and where the screw comprises the at least one internal channel, or
k) the counter element is designed integrally with the fastening bolt and is formed and provided to be countered on an inner surface of the bottom of the brake cylinder housing.

The invention also makes use of the fact that the at least one fastening bolt usually projects away from a bottom of the brake cylinder housing, the bottom delimiting the return spring chamber. This is usually also the case with combined service and spring brake cylinders (so-called combination cylinders), in which the service brake cylinder is formed by a pneumatic brake cylinder according to the invention. In other words, the ventilation and exhaust of the return spring chamber, when its volume changes due to a movement of the brake piston, then takes place through the at least one internal channel of the at least one fastening bolt.

The internal channel may comprise a through opening extending in the axial direction of the fastening bolt, for example a central through opening. Also, the internal channel may have any course within the fastening bolt as long as it opens with the first mouth into the return spring chamber and with the second mouth into the outer area of the brake cylinder or of the return spring chamber.

Thus, the at least one fastening bolt has an advantageous dual function in that it serves, on the one hand, as part of the fastening device for fastening the pneumatic brake cylinder to the support structure and, on the other hand, as part of the ventilation device for venting the return spring chamber. This also leads to a reduction of the parts of the brake cylinder, because then an additional ventilation bore together with a connecting piece as in the DE 198 30 154 A1 mentioned at the beginning is no longer necessary.

Since the at least one fastening bolt preferably projects away from a bottom of the brake cylinder in an axial direction with respect to a central axis of the brake cylinder, there is no more need for sockets welded into vent holes in the cylindrical wall of the brake cylinder. Without such radially projecting nozzles, the brake cylinder can be connected to a spring brake cylinder and/or to an intermediate flange in a crimping process.

Particularly preferably, the at least one fastening bolt and the piston rod are arranged parallel to each other.

The at least one fastening bolt forms a separate component and comprise a bolt shaft, preferably an external thread formed on the bolt shaft and a counter element which projects radially away in the region of one end of the bolt shaft and is designed integrally with the fastening bolt. The counter element may in particular comprise an attachment surface for a screwing tool.

In an alternative, the fastening bolt may be of the screw type, in which case the bolt shaft forms a screw shaft and the counter element forms a screw head. Then, the screw comprises the at least one internal channel.

Also, at least one bore is formed in the region of the bottom of the brake cylinder, through which the bolt shaft projects or into which the bolt shaft projects and/or, in particular, may be screwed in with its external thread.

According to a preferred embodiment, the bore may be internally threaded, and the bolt shaft may be formed and provided to be threaded with the external thread into the internal thread of the bore. Also, the counter element may be formed and provided to be countered at the support structure by or at a support structure bore.

The bore may be formed in a wall of the bottom of the brake cylinder and/or in a separate body which is releasably or non-releasably connected to an inner surface of the bottom of the brake cylinder housing.

The advantage of this preferred embodiment is that a type of screw connection can then be provided between a brake caliper as an example of a support structure and the brake cylinder, whereby, in contrast to DE 10 2012 016 712 A1 mentioned at the beginning, the ratios are reversed. Then, there are no fastening bolts fixedly connected to the bottom of the brake cylinder housing, but the bottom is provided with the bore, into which a screw can be screwed with its screw head countered, for example, at the support structure bore (e.g. screw eye) of the brake caliper. As a result, the brake cylinder does not have to be removed further from the brake caliper, as seen in the direction of the central axis of the brake cylinder, during disassembly from the brake caliper than is necessary for disengaging the piston rod of the brake cylinder from a clamping device of the brake caliper. As a result, the installation space within the wheel housing of the vehicle required for disassembly of the brake cylinder is advantageously reduced.

A method for releasing the brake cylinder from the support structure, in particular from a caliper of a disc brake then comprises at least the following steps:
a) attachment of a screwdriving tool to the screw head,
b) unscrewing the at least one screw from the brake cylinder housing bore and/or from the separate body,
c) removal of at least one screw,
d) disengaging the piston rod of the brake cylinder from the clamping device in the brake caliper.

According to another alternative, the counter element of the fastening bolt is formed and provided to be countered to an inner surface of the bottom of the brake cylinder housing. In this regard, the bolt shaft may be formed and provided to extend through a brake cylinder housing bore in the bottom of the brake cylinder housing and a support structure bore of the support structure and to be locked to the support structure through bore with a nut threaded with the external thread of the bolt shaft, or to be threaded with an external thread with an internal thread of the support structure bore of the support structure.

Generally, the at least one fastening bolt can be provided with a connection for a compressed air line in the region of the second mouth of the internal channel, and/or can be connected to a compressed air duct by means of the second mouth of the internal duct. By this measure, the ventilation and exhaust (deaeration) of the return spring chamber as described at the beginning can take place at a modified, in particular higher level with respect to the brake cylinder. In this case, the compressed air line connected to the connection and/or the compressed air duct can open into the atmosphere or into a cabin of the vehicle.

Particularly preferably, apart from the at least one internal channel formed in the at least one fastening bolt, no further flow connection can be provided between the return spring chamber and the outer area of the brake cylinder. Advantageously, the wall of the brake cylinder housing does not then have to be provided with a ventilation or vent hole for the return spring chamber.

In particular, the brake piston can also be completely rigid or comprise a diaphragm attached to the brake cylinder housing by a diaphragm edge and a rigid plate part on which the diaphragm is supported and which is connected to the piston rod.

A second aspect of the invention is based on a disc brake for a vehicle with a pneumatic brake cylinder, a brake disc, a brake caliper as a support structure, a clamping device and with brake pads, wherein the brake caliper engages over the brake disc and the clamping device, which can be actuated by the brake cylinder, is arranged in the brake caliper, by means of which, during braking, the brake pads can be pressed against the brake disc on both sides, the retractable and extendable piston rod of the brake cylinder being in engagement with the clamping device, and the brake caliper being releasably fastened to the brake cylinder by means of a fastening device.

In this second aspect, according to the invention, the pneumatic brake cylinder is as described above, i.e. according to the first aspect of the invention. The pneumatic brake cylinder is then removably attached to the brake caliper by means of the fastening device described above.

In this case, the retractable and extendable piston rod of the brake cylinder engages with the clamping device, for example, in that the clamping device has a receptacle for one end of the piston rod, in which this end engages.

The brake caliper is detachably fastened to the brake cylinder by means of a fastening device means that the brake caliper and the brake cylinder can be dismantled from each other without destruction by detaching the fastening device.

As described above, according to the preferred embodiment of the pneumatic brake cylinder, the brake cylinder housing bore may be internally threaded, and the bolt shaft may be formed and provided to be threaded with the external thread into the internal thread of the brake cylinder housing bore. Also, the counter element, e.g. a nut or a screw head may be formed and provided to be countered at a support structure bore of the support structure.

The brake cylinder housing bore may be formed in a wall of the bottom of the brake cylinder and/or in a separate body which is releasably or non-releasably connected to an inner surface of the bottom of the brake cylinder housing.

The advantage of this preferred embodiment of the pneumatic brake cylinder as a component of the disc brake is that a type of screw connection can then be provided between the brake caliper and the brake cylinder. Since the bottom of the brake cylinder housing is then provided with at least one brake cylinder housing bore, a screw countered with its screw head, for example at a screw eye or at an edge of a support structure through bore of the brake caliper, can be screwed into the brake cylinder housing bore or into the separate body detachably or non-detachably fastened there. As a result, the pneumatic brake cylinder does not have to be moved further away from the brake caliper, as seen in the direction of the central axis of the brake cylinder, during disassembly from the brake caliper than is necessary for disengaging the piston rod of the brake cylinder from a clamping device of the brake caliper. As a result, the installation space within the wheel housing of the vehicle required for disassembly and assembly of the brake cylinder is advantageously reduced.

A method of releasing the brake cylinder from the caliper of a disc brake then comprises at least the following steps:
a) attachment of a screwdriving tool to the screw head,
b) unscrewing the at least one screw from the brake cylinder housing bore and/or from the separate body,
c) removal of at least one screw,
d) disengaging the piston rod of the brake cylinder from the clamping device in the brake caliper.

Also, the brake caliper may have a recess such that, viewed in a direction perpendicular to an axis of the at least one fastening bolt, a screwing tool can be applied to the fastening bolt.

Also, the caliper may include at least one support structure bore or screw eye for passing through and securing or countering the fastening bolt.

Preferably, in the disc brake, the pneumatic brake cylinder may be part of a combined service and spring brake cylinder, with an intermediate flange being disposed between the brake cylinder and a spring brake cylinder to define the service brake chamber. Alternatively, in the disc brake, the pneumatic brake cylinder may be a separate service brake cylinder.

According to a third aspect of the invention, a vehicle, in particular a commercial vehicle, is proposed comprising a pneumatic or electro-pneumatic braking device comprising at least one disc brake described above.

### Drawings

Examples of embodiments of the invention are shown below in the drawings and will be explained in more detail in the following description. The drawings shows
- Fig. 1: a perspective partial sectional view of a disc brake according to a preferred embodiment with a pneumatic brake cylinder attached to a brake caliper by means of a detachable fastening device;
- Fig. 2: another perspective view of the disc brake of Fig. 1;
- Fig. 3: an enlarged perspective view of the disc brake of Fig. 1 in the region of a fastening device of the pneumatic brake cylinder;
- Fig. 4: a preferred embodiment of a fastening bolt of the fastening device of the pneumatic brake cylinder;
- Fig. 5: a partial longitudinal section through the disc brake of Fig. 1 in the area of the fastening device;
- Fig. 6: a perspective view of a disc brake according to a further embodiment with a pneumatic brake cylinder according to a further embodiment attached to a brake caliper by means of a releasable attachment device;
- Fig. 7: a perspective view of the disc brake of Fig. 6 enlarged in the area of the fastening device of the pneumatic brake cylinder;
- Fig. 8: another embodiment of a fastening bolt of the fastening device of the pneumatic brake cylinder;
- Fig. 9: a longitudinal section through the disc brake of Fig. 6 in the area of the fastening device.

### Description of the embodiments

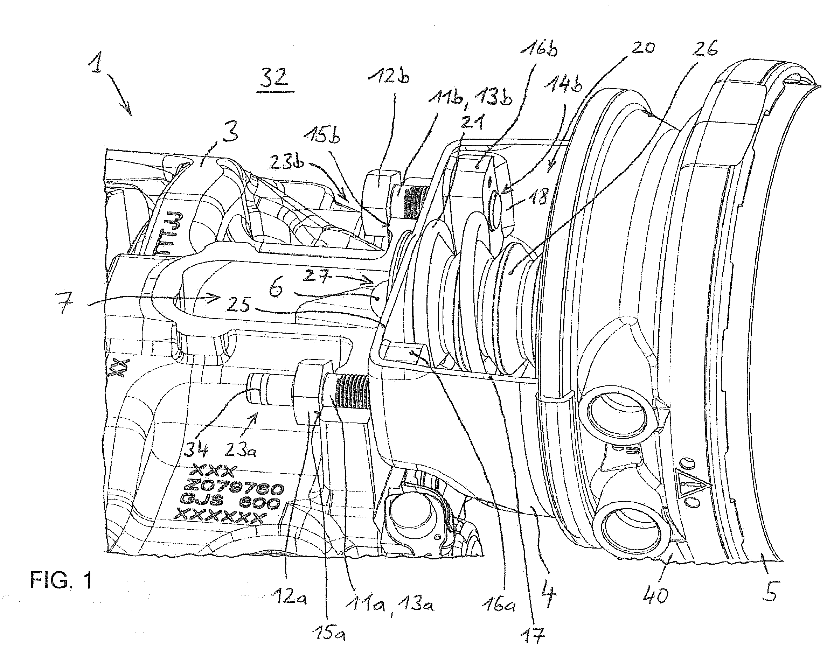

Fig. 1 shows a perspective partial sectional view of a preferred embodiment of a disc brake 1 of a commercial vehicle, with a pneumatic brake cylinder 4 detachably fastened to a brake caliper 3 by means of a detachable fastening device 2. The pneumatic brake cylinder 4 is here, for example, a pneumatic service brake cylinder, which forms a structural unit with an intermediate flange 40 and a spring brake cylinder 5, which then represents a so-called combination cylinder of pneumatic service brake cylinder 4 and pneumatic spring brake cylinder 5.

The disc brake 1 comprises the pneumatic service brake cylinder 4, a brake disc not shown here, the brake caliper 3 which straddles the brake disc, and a clamping device 7 not shown in detail here arranged in the brake caliper 3 and operable by a piston rod 6 of the service brake cylinder 4, and brake pads 8.

More precisely, the piston rod 6 is connected to a brake piston 9 of the service brake cylinder 4, which is actuated by venting and exhausting a brake chamber 10 of the service brake cylinder 4, wherein the piston rod 6 moves out of a brake cylinder housing 24 of the service brake cylinder 4, for example, during venting and moves into the brake cylinder housing 24 during exhausting into the service brake cylinder 4. For this purpose, a central opening 27 is provided in a bottom 25 of the brake cylinder housing 24, which opening 27 is sealed by a seal 26, in this case for example a bellows. Thus, no air can pass through the opening 27 from the return spring chamber 20 to an outer area 32, and vice versa. The brake chamber 10 is bounded by the intermediate flange 40, the brake cylinder housing 24 and the brake piston 9, and the return spring chamber 20 is bounded by the brake cylinder housing 24 and by the brake piston 9.

One end of the piston rod 6 projecting axially from the opening 27 engages with a receptacle of the clamping device (brake application device) 7 in such a way that the retracting or extending movement of the piston rod 6 is transmitted to a mechanism of the clamping device 7, whereupon the latter presses the brake pads 8 against the brake disc on both sides during brake application (venting of the brake chamber 10) and releases them from the brake disc during brake release (exhausting of the brake chamber 10).

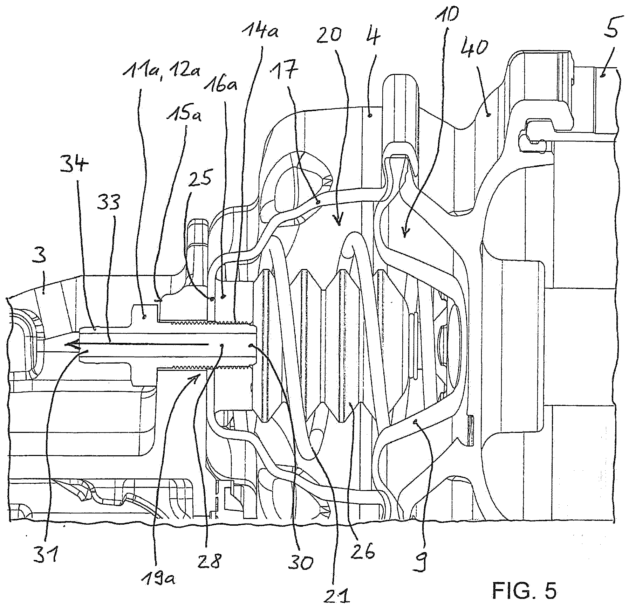

The fastening device 2, by means of which the brake caliper 3 and the service brake cylinder 4 can be coupled or released from one another, comprises here, for example, a plurality of fastening bolt connections, designed here, for example, as screw connections. Such a fastening bolt connection or screw connection comprises here a first fastening bolt 11, particularly designed here as a first fastening screw with a first screw head 12a, a first screw shaft 13a and an external thread formed on the first screw shaft 13a, and at least one first bore 14a formed, for example, in the service brake cylinder 4 with an internal thread, into which the first screw shaft 13a is screwed with the external thread, as is visible in particular in **Fig. 5****.** The first screw head 12a is locked to a first counter surface 15a of the brake caliper 3, which is formed here for example by a screw eye of the brake caliper 3. The first and second bores 14a, 14b each connect to a brake cylinder housing bore 19a, 19b, which are preferably designed here as threadless through bores.

In an analogous manner, a second screw 11b of the fastening bolt connection or screw connection is provided, which also locks with its second screw head 12b on a second counter surface 15b of the brake caliper 3, which here is also formed, for example, as a screw eye. In this case, a second screw shaft 13b is also screwed with its external thread into an internal thread of a second bore 14b (**Fig. 1**). Preferably, the screws 11a and 11b of the screw connections and the piston rod 6 of the service brake cylinder 4 are arranged parallel to each other.

The bores 14a and 14b are formed here, for example, as blind bores or through bores in here, for example, separate first and second bodies 16a, 16b, which are arranged in the interior of the service brake cylinder 4, as shown in **Fig. 1** and **Fig. 5****,** and in particular are welded to a wall 17 of the service brake cylinder 4 here, for example, in each case by means of a circumferential weld seam 18, as shown in **Fig. 1****.** The bores 14a and 14b are then each provided with an internal thread on their radially inner circumferential surface, into which the external threads of the screw shafts 13a, 13b are screwed. The first and second bodies 16a and 16b are, for example, cuboidal in shape, at least their outer surfaces being formed in such a way that they can fit against the inner surface of the wall 17 or the bottom 25 of the service brake cylinder 4.

The screw shafts 13a, 13b of the screws 11a, 11b extend through brake cylinder housing bores 19a, 19b in the bottom 25 of the brake cylinder housing 24 to be screwed to the holes 14a, 14b of the bodies 16a, 16b. In particular, the first and second bodies 16 are arranged in a return spring chamber 20 separated from the brake chamber 10 by the brake piston 9, in which return spring chamber 20 a return spring 21 is accommodated which biases the brake piston 9 into the released position of the brake. Also arranged here between the screw heads 12a, 12b and the support structure bores 15a, 15b, here for example each in the form of screw eyes, is a respective annular washer 22a, 22b.

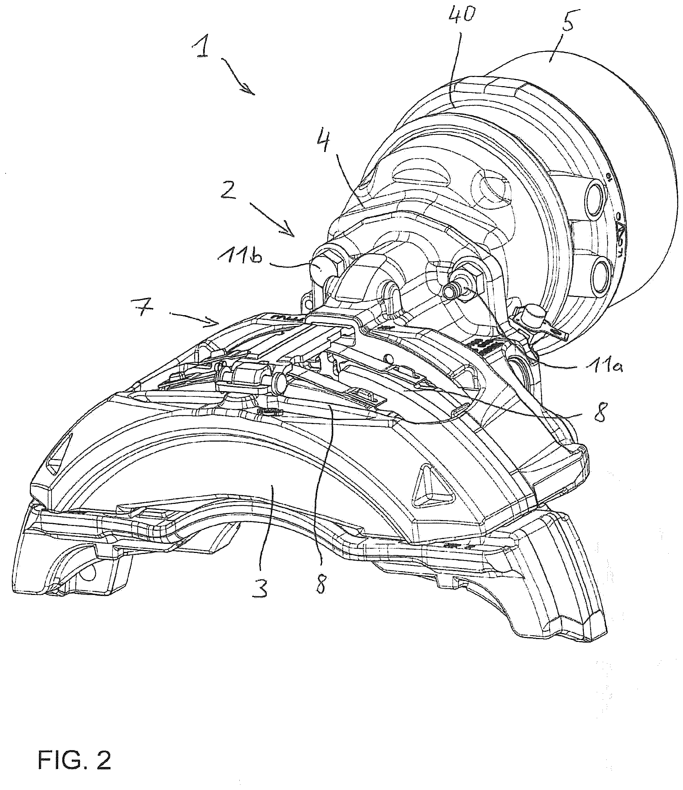

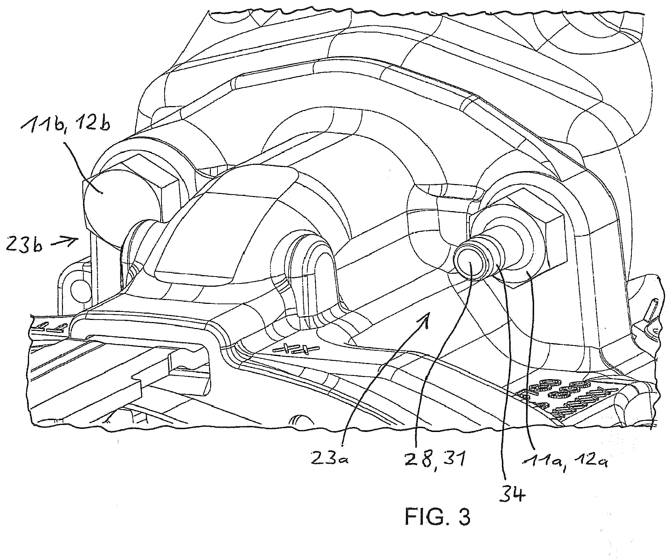

As **Fig. 2** and **Fig. 3** best show, the brake caliper 3 can have first and second recesses 23a, 23b in the region of the screw heads 12a, 12b and in the region of the counter support structure bores 15a, 15b (e.g. screw eyes), respectively, in such a way that, viewed in a direction perpendicular to the screw axes of the screws 11a, 11b, a screwing tool can be applied to the screw heads 12a, 12b and then the screws 11a, 11b can be screwed by means of the screwing tool. For this purpose, the screw heads 12a, 12b can each have any attachment surface for a screwing tool, in this case for example an outer hexagonal profile for an open-end wrench. By applying the open-end wrench to the hexagonal profile of the respective screw head 12a, 12b, the screw connection can therefore be assembled or loosened. Preferably, the fastening device 2 comprises several such screw connections arranged in particular distributed over the circumference of the service brake cylinder 4.

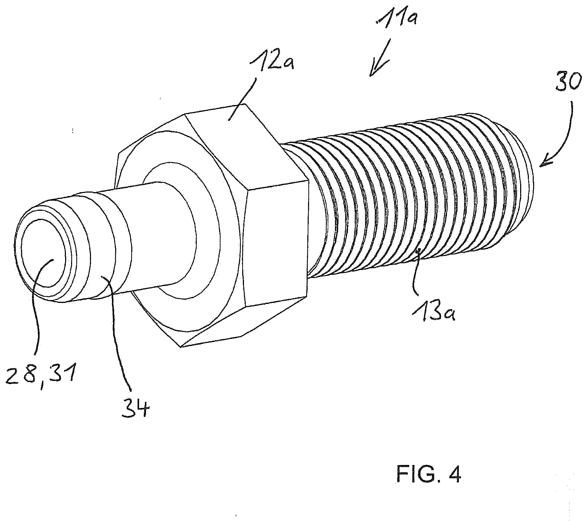

As **Figures 1** to **5** show, the first screw 11a differs from the second screw 11b, which in this respect represents a commercially available screw, in what will be described below. The first screw 11a is provided with an internal channel 28 of a ventilation device 29 of the service brake cylinder 4 or of the return spring chamber 20, which axially extends through, for example, the entire first screw 11a and is central in this case. The internal channel 28 opens with a first here, for example, end-side mouth or opening 30 into the return spring chamber 20 and with a second here, for example, end-side mouth or opening into an outer area or region 32 of the service brake cylinder 4. Consequently, the internal channel 28 provides a flow connection, here for example the only flow connection, between the return spring chamber 20 and the outer area 32 of the brake cylinder 4, as also indicated by the arrow 33 in **Fig. 5****.** Otherwise, the return spring chamber 20 is preferably designed to be pressure-tight. Meanwhile, the second screw 11b does not have such an internal channel 28 here, for example, but may alternatively also be provided with such an internal channel 28.

As a further difference to the second screw 11b, the first screw 11a has, for example as a central axial extension of the first screw head 12a, a connection 34 to which a pressure line not shown here is connected which, for example, opens into a driver's cab of the commercial vehicle. In this respect, the second mouth 31 of the internal duct 28 is formed here at or in the connection 34. As a result, the ventilation of the return spring chamber 20 can take place at a higher level, namely in the driver's cab, compared with the lower level of the service brake cylinder 4 in the wheel housing of the commercial vehicle, which advantageously prevents dirt and water from penetrating into the return spring chamber 20, in particular in the case of watercourse passages.

Preferably, the second screw 11b does not have such a connection 34 here, but if it is also provided with an internal channel 28, it may also have such a connection 34.

However, it is preferably sufficient if only one screw 11a of the screw connections of the fastening device 2 is provided with an internal channel 28 and a connection 34.

Therefore, starting from the assembled state of the service brake cylinder 4 on the caliper 3 of the disc brake 1 shown in **Fig. 1****,** in order to detach the service brake cylinder 4 from the caliper 3, the open-end wrench is applied to the hexagonal profiles of the screw heads 12a, 12b, for example, and then the screws 11a, 11b are unscrewed from the bores 14a, 14b of the bodies 16a, 16b and then removed. Further, the end of the piston rod 6 of the service brake cylinder 4 is disengaged from the associated receiver of the clamping device 7 in the brake caliper 3 by axially withdrawing the service brake cylinder 4 from the brake caliper 3 a distance, this axial direction being parallel to the piston rod 6. When the end of the piston rod 6 is then out of engagement with the associated receptacle of the clamping device 7, the service brake cylinder 4, which has been released from the brake caliper 3, is removed from the brake caliper 3 perpendicularly to the piston rod 6, in a lateral direction, and can then be pulled out of the wheel housing transversely, for example.

For disassembly of the service brake cylinder 4 from the brake caliper 3, after loosening and removal of the screws 11a, 11b, the service brake cylinder 4 must therefore be removed from the brake caliper 3, in particular as seen in the direction of the longitudinal axes of the screws 11a, 11b, only until the end of the piston rod 6 of the service brake cylinder 4 is out of engagement with the associated receptacle of the application device 7 in the brake caliper 3.

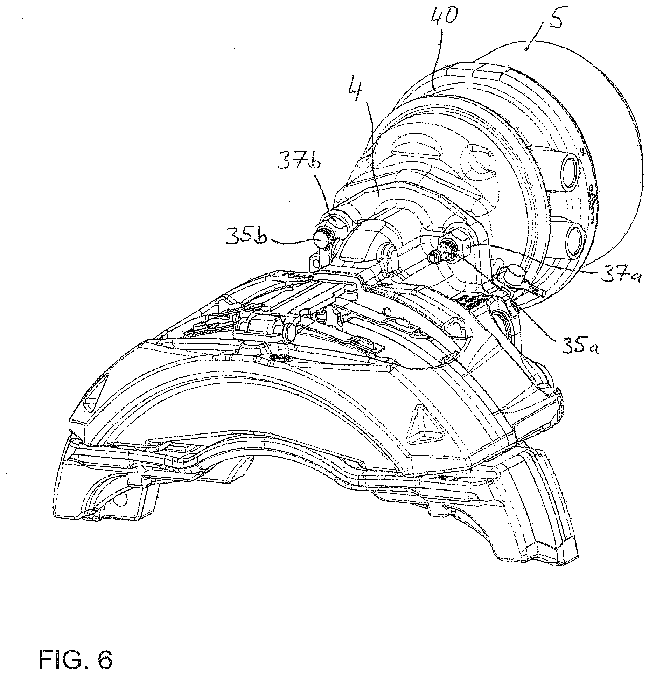

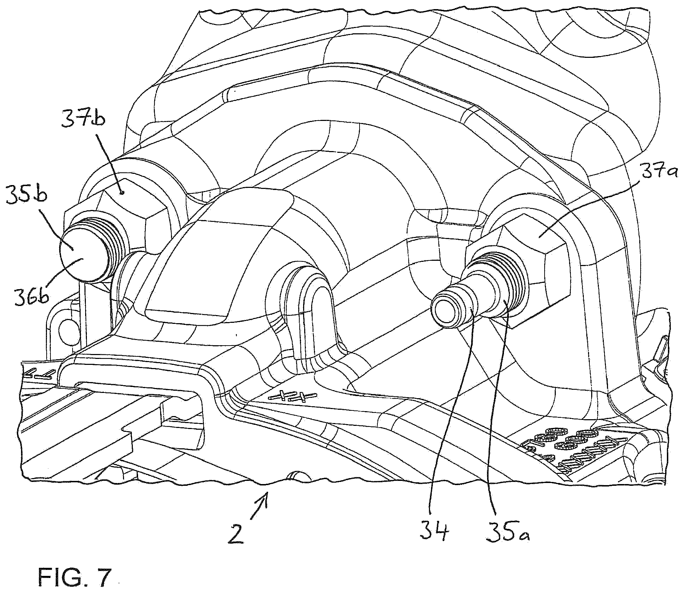

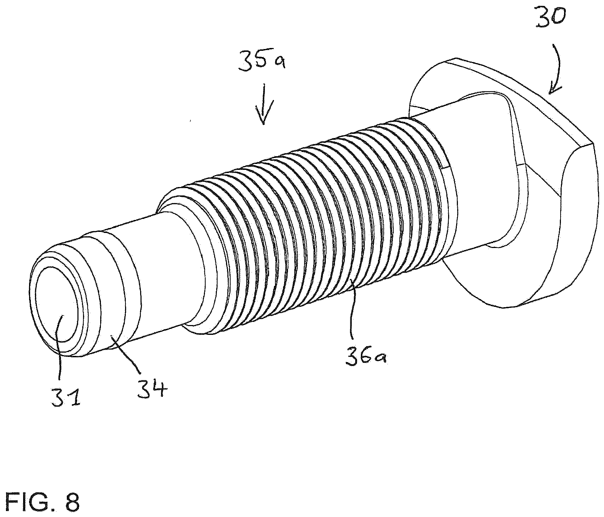

**Figures 6** to **9** show a further embodiment of the disc brake 1 with a further embodiment of a service brake cylinder 4. In contrast to the preferred embodiment of **Figures 1** to **5****,** the fastening device 2 is designed differently here.

Here, on a first fastening bolt 35a, which is also preferably designed as a separate body here, a first counter element 39a is preferably formed integrally and is provided to be locked to an inner bottom surface of the bottom 25 of the brake cylinder housing 24, while a first bolt shaft 36a provided with an external thread extends through the first brake cylinder housing bore 19a, which is preferably threadless here, and is locked by a first nut 37a to the first support structure bore 15a, which is also preferably designed as a screw eye of the brake caliper 3 here. An internal channel 28 is formed in the first fastening bolt 35a, which, as described in the preferred embodiment example above, opens with the first here, for example, end-side mouth 30 into the return spring chamber 20 and with the second here, for example, end-side mouth 31 into the outer area 32 of the service brake cylinder 4.

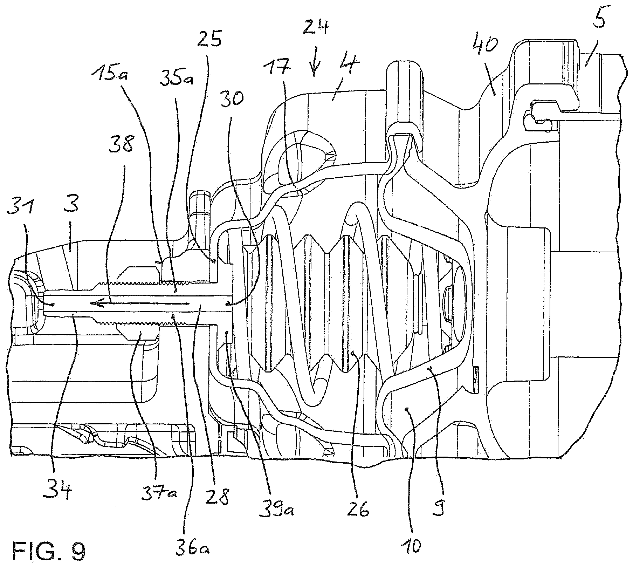

Consequently, the internal channel 28 provides a flow connection, in this case for example the only flow connection, between the return spring chamber 20 and the outer area 32, as also indicated by the arrow 33 in **Fig. 9****.**

Furthermore, the first fastening bolt 35a has the connection 34 as, for example, a central axial extension of the first bolt shaft 36a, to which a pressure line not shown here is also connected, which pressure line opens, for example, into a driver's cab of the commercial vehicle. In this respect, the second mouth 31 of the internal channel 28 is also formed here at or in the connection 34.

In addition, the fastening device 2 of the further embodiment comprises a second fastening bolt 35b which here, for example, has no internal channel 28 and also no connection 34, but is otherwise configured like the first fastening bolt 35a and is locked at the second support structure bore 15b, here also preferably configured as a screw eye, by a second nut 37b.

However, as in the preferred embodiment, the second attachment bolt 35b may include an internal channel 28 and a connection 34.

### List of reference signs

- 1: disc brake
- 2: fastening device
- 3: brake caliper
- 4: service brake cylinder
- 5: spring brake cylinder
- 6: piston rod
- 7: clamping device
- 8: brake pads
- 9: brake piston
- 10: brake chamber
- 11 a/b: first/second screw
- 12a/b: first/second screw head
- 13a/b: first/second screw shaft
- 14a/b: first/second bore
- 15a/b: first /second support structure bore
- 16a/b: first/second body
- 17: Wall
- 18: Weld seam
- 19a/b: first/second brake cylinder housing bore
- 20: return spring chamber
- 21: return spring
- 22a/b: first/second ring washer
- 23a/23: first/second recess
- 24: brake cylinder housing
- 25: bottom
- 26: seal
- 27: opening
- 28: internal channel
- 29: ventilation device
- 30: first mouth
- 31: second mouth
- 32: outer area
- 33: arrow
- 34: connection
- 35a/b: first/second mounting bolt
- 36a/b: first/second bolt shaft
- 37a/b: first/second nut
- 38: arrow
- 39a/b: first/second counter element
- 40: Intermediate flange

## Claims

1. Pneumatic brake cylinder (4) of a brake of a vehicle, with
a) a brake cylinder housing (24),
b) a brake piston (9) guided axially in the brake cylinder housing (24) and having a retractable and extendable piston rod (6), which projects through an opening (27) in a bottom (25) of the brake cylinder housing (24),
c) a brake chamber (10) which can be ventilated and exhausted, wherein the brake piston (9) together with the piston rod (6) assumes a brake application position when the brake chamber (10) is ventilated and a brake release position when the brake chamber (10) is exhausted, and wherein the brake piston (9) bounds the brake chamber (10),
d) a return spring chamber (20), in which a return spring (21) loading the brake piston (9) into the release position is accommodated and which is bounded on the one hand by the brake piston (9) and on the other hand by the bottom (25) of the brake cylinder housing (24),
e) a fastening device (2) which is provided and designed for the detachable fastening of the brake cylinder (4) to a support structure (3) for the brake cylinder (4), the fastening device (2) comprising at least one fastening bolt (11a, 11b; 35a, 35b) projecting away from the brake cylinder housing (24) in the region of the bottom (25),
f) a ventilation device (29) cooperating with the return spring chamber (20) in such a way that, in the event of a change in the volume of the return spring chamber (20) as a result of a movement of the brake piston (9) by means of the ventilation device, air can pass out of the return spring chamber (20) or into the return spring chamber (20), where
g) the ventilation device (29) comprises the at least one fastening bolt (11a, 11b; 35a, 35b) which has at least one internal channel (28) which opens, on the one hand, with a first mouth (30) into the return spring chamber (20) and, on the other hand, with a second mouth (31) into an outer area (32) of the brake cylinder (4), and where
h) the at least one fastening bolt (11a, 11b; 35a, 35b) forms a separate component and comprises a bolt shaft (13a, 13b; 36a, 36b) and a counter element (39a, 39b), which projects radially away in the region of one end of the bolt shaft (13a, 13b; 36a, 36b), and where
i) at least one bore (14a, 14b) is formed in the region of the bottom (25) of the brake cylinder (4), through which bore (14a, 14b) the bolt shaft (13a, 13b; 36a, 36b) projects or into which bore the bolt shaft (36a, 36b) projects, **characterized in, that**
j) the fastening bolt (11a, 11b) is a screw where the counter element (12a, 12b) is a screw head that is designed integrally with the fastening bolt (11a, 11b) and formed and provided to be countered at a support structure bore (15a, 15b) of the support structure (3) and where the screw comprises the at least one internal channel (28), or
k) the counter element (39a, 39b) is designed integrally with the fastening bolt (35a, 35b) and is formed and provided to be countered on an inner surface of the bottom (25) of the brake cylinder housing (24).

2. Brake cylinder according to claim 1, **characterized in that** the at least one fastening bolt (11a, 11b; 35a, 35b) and the piston rod (6) are arranged parallel to each other.

3. Brake cylinder according to claim 1 or 2, **characterized in that**
a) the at least one fastening bolt (11a, 11b; 35a, 35b) comprises an external thread formed on the bolt shaft (13a, 13b; 36a, 36b), and
b) the bore (14a, 14b) is provided with an internal thread and the bolt shaft (13a, 13b; 36a, 36b) is designed and intended to be screwed with the external thread into the internal thread of the bore (14a, 14b).

4. Brake cylinder according to one of the preceding claims, **characterized in that** the bore (14a, 14b)
a) is formed in the bottom (25) of the brake cylinder (4), and/or
b) is formed in a separate body (16a, 16b) which is detachably or non-detachably connected to an inner surface of the bottom (25) of the brake cylinder (4).

5. The brake cylinder according to one of the preceding claims, **characterized in that** the bolt shaft (36a, 36b) is formed and provided,
a) to extend through a support structure bore (15a, 15b) of the support structure (3) and to be screwed with an external thread to a nut (37a, 37b), or
b) to be screwed with an external thread to an internal thread of the support structure bore (15a, 15b) of the support structure (3).

6. Brake cylinder according to one of the preceding claims, **characterized in that** the at least one fastening bolt (11a, 11b; 35a, 35b)
a) is provided with a connection (34) for a compressed air line in the region of the second mouth (31) of the internal channel (28), and/or
b) is connected with the second mouth (31) of the internal channel (28) to a compressed air duct.

7. Brake cylinder according to claim 6, **characterized in that** the compressed air line and/or the compressed air duct opens into the atmosphere or into a cabin of the vehicle.

8. Brake cylinder according to any one of the preceding claims, **characterized in that** apart from the internal channel (28) formed in the at least one fastening bolt (11a, 11b; 35a, 35b), no further flow connection is provided between the return spring chamber (20) and the outer area (32) of the brake cylinder (4).

9. Brake cylinder according to one of the preceding claims, **characterized in that** the brake piston (9) is of rigid design or comprises a diaphragm attached to the brake cylinder housing (24) by a diaphragm edge and a plate part on which the diaphragm is supported and which is connected to the piston rod (6).

10. Disc brake (1) for a vehicle with a pneumatic brake cylinder (4), a brake disc, a brake caliper (3) as a support structure, a clamping device (7) and with brake pads (8), wherein the brake caliper (3) engages over the brake disc and the clamping device (7), which can be actuated by the brake cylinder (4), is arranged in the brake caliper (3), by means of which, during braking, the brake pads (8) can be pressed against the brake disc on both sides, the retractable and extendable piston rod (6) of the brake cylinder (4) being in engagement with the application device (7), **characterized by** a pneumatic brake cylinder (4) according to one of the preceding claims, which is releasably fastened to the brake calliper (3) by means of the fastening device (2) .

11. Disc brake according to claim 10, **characterized in that** the brake calliper (3) has a recess (23a, 23b) such that, viewed in a direction perpendicular to an axis of the at least one fastening bolt (11a, 11b; 35a, 35b), a screwing tool can be applied to the fastening bolt (11a, 11b; 35a, 35b).

12. Disc brake according to one of claims 10 or 11, **characterized in that** the brake caliper (3) comprises at least one support structure bore (15a, 15b) for passing through and fastening the fastening bolt (11a, 11b; 35a, 35b).

13. Disc brake according to any one of claims 10 to 12, **characterized in that** the pneumatic brake cylinder (4) is
a) part of a combined service and spring-brake cylinder, wherein between the brake cylinder (4) and a spring-brake cylinder an intermediate flange (40) is arranged which delimits the brake chamber (10), or
b) is a separate service brake cylinder (4).

14. Vehicle with at least one disc brake (1) according to at least one of claims 10 to 13.
